# EUROPEAN PATENT SPECIFICATION

(11) **EP 1 852 287 B1**
(45) Date of publication and mention of the grant of the patent: **16.12.2009**
(21) Application number: 07008571.7
(22) Date of filing: 26.04.2007
(51) Int. Cl.: B60J 5/00, B60R 13/06, B60J 10/00

(54) **Parting seal for vehicle door**
Trenndichtung für eine Fahrzeugtür
Joint de séparation pour portière de véhicule

(30) Priority: 01.05.2006 JP 2006127198
(43) Date of publication of application: 07.11.2007
(73) Proprietor: Kinugawa Rubber Ind. Co., Ltd., Chiba 263-0005 (JP)
(72) Inventor: Uchida, Ken, Chiba-shi, Chiba 263-0005 (JP)
(74) Representative: Grünecker, Kinkeldey, Stockmair & Schwanhäusser Anwaltssozietät

(56) References cited:
- JP-A- 8 080 742
- JP-A- 8 142 673
- JP-A- 8 207 575
- JP-A- 2002 087 070
- JP-A- 2005 306 345

## Description

### BACKGROUND OF THE INVENTION

The present invention relates to a parting seal which is provided along an inside of a lower end portion of a vehicle door and seals a clearance between the vehicle door and a vehicle body.

Japanese Patent Application First Publication No. 2002-87070 describes a parting seal for a vehicle door, which is disposed at a lower end portion of a door body at which a door inner panel on an inside of a vehicle is joined with a door outer panel on an outside of the vehicle. The parting seal is arranged inside the lower end portion of the door body and extends in a fore-and-aft direction of the vehicle so as to be opposed to a side sill of a body of the vehicle. Specifically, the parting seal includes a mount base having a generally flat plate shape, a seal lip on a side of the side sill, and an auxiliary lip on a side of the door inner panel. The mount base has a mount hole on an upper end portion thereof and is made of a hard solid rubber. The seal lip and the auxiliary lip are branched from a lower end portion of the mount base and extend downwardly. The seal lip and the auxiliary lip are integrally formed with the mount base and made of a soft sponge rubber. The seal lip and the auxiliary lip are fixed to an inside surface of a lower end portion of the door inner panel by a resin clip which is engaged with the mount hole of the mount base. When the vehicle door is closed, a tip end surface of the seal lip of the parting seal which is directed to the inside of the vehicle is elastically contacted with an outer surface of the side sill. At the same time, the auxiliary lip of the parting seal is elastically contacted with the inside surface of the lower end portion of the door inner panel. The seal lip and the auxiliary lip thus cooperate with each other to seal a clearance between the vehicle door and the side sill of the vehicle body.

Japanese Patent Application First Publication No. 7-89396 describes a parting seal for a vehicle door, which is disposed on an outer surface of an upper end portion of a side sill surrounding an opening of the vehicle body. The parting seal extends in a fore-and-aft direction of the vehicle so as to be opposed to an inner surface of a lower end portion of the vehicle door. The parting seal includes a hollow seal portion and an engaging portion that projects from an outer surface of the seal portion in a direction of a tangent line of the seal portion. The engaging portion is engaged in a space between the outer surface of the side sill and an inner end surface of a resin scarf plate that covers an upper portion of the side sill. The parting seal is thus fixed to the outer surface of the upper end portion of the side sill. When the vehicle door is closed, the seal portion of the parting seal is pushed into a clearance between the inner surface of the lower end portion of the vehicle door and the outer surface of the upper end portion of the side sill. At this time, the seal portion is flexibly deformed such that the outer surface thereof is contacted with the inner surface of the lower end portion of the vehicle door and the outer surface of the upper end portion of the side sill. The parting seal thus seals a clearance between the vehicle door and the side sill.

### SUMMARY OF THE INVENTION

However, in the parting seal of Japanese Patent Application First Publication No. 2002-87070 described above, when the vehicle is running, it occurs that a stone on a road is jumped and enters into a clearance between the seal lip and the auxiliary lip due to contact with a wheel of the vehicle and the stone is caught in the clearance without falling off therefrom. In a case where the stone caught in the clearance between the seal lip and the auxiliary lip is relatively large, the side sill will be pressed and collapsed by the stone when the vehicle door is closed again.

On the other hand, in the parting seal of Japanese Patent Application First Publication No. 7-89396, the hollow seal portion has a closed section, whereby upon closing the vehicle door, elastic force (reaction force) which is generated in the seal portion becomes large to thereby cause deterioration in closing ability of the vehicle door. Further, the parting seal of this conventional art has ends open in the fore-and-aft direction of the vehicle. It occurs that water such as rain flowing along a front end portion and a rear end portion of the vehicle door infiltrates an inside of the seal portion through the respective ends of the parting seal. In such a case, the water will remain inside the seal portion because the seal portion has a closed-loop shape and no drain. In winter season and cold regions, the water remaining inside the seal portion will be frozen to thereby cause decrease in sealability of the seal portion or deterioration in closing ability of the vehicle door.

The present invention has been made in view of the above-described technological problem. It is an object of the present invention to provide a parting seal for a vehicle door which is capable of preventing a jumped stone from being caught between the vehicle door and the vehicle body during the vehicle running and ensuring good closing ability and drainability of the vehicle door.

To achieve the above object, according to one aspect of the present invention, there is provided a parting seal for a door of a vehicle, the parting seal comprising:
a mount base adapted to be mounted to a lower end portion of the door of the vehicle in a vertical direction of the vehicle, the mount base including a lower end portion and an upper end portion that is mounted to an inside surface of the lower end portion of the door of the vehicle;
a seal portion being flexibly deformed into a deformed state when the door of the vehicle is in a closed position; wherein
the seal portion extends downwardly from a side of the upper end portion of the mount base in the vertical direction of the vehicle;
when the door of the vehicle is in a closed position, the seal portion is pressed against a body of the vehicle and cooperates with the mount base to seal a clearance between the body of the vehicle and the door of the vehicle in the deformed state;
a projection is provided which extends from the lower end portion of the mount base and bends toward an inside of the vehicle, the projection being integrally formed with the mount base;
an extension is provided which extends from a lower end portion of the seal portion and bends to be opposed to the projection, the extension being integrally formed with the seal portion,
the projection includes a tip end which is located spaced from an outside surface of the body of the vehicle with a clearance when the seal portion is in the deformed state, and
the extension includes a tip end which is always placed upwardly offset from the tip end of the projection in the vertical direction of the vehicle when the seal portion is in the deformed state.

### BRIEF DESCRIPTION OF THE DRAWINGS

FIG. 1 is a cross-sectional view of a parting seal of a first embodiment of the present invention, taken along line 1-1 of FIG. 3.

FIG. 2 is a cross-sectional view similar to FIG. 1, but shows the parting seal of a second embodiment of the present invention.

FIG. 3 is a schematic perspective view of a vehicle to which the parting seal of the first and second embodiments of the present invention is applicable.

### DETAILED DESCRIPTION OF THE INVENTION

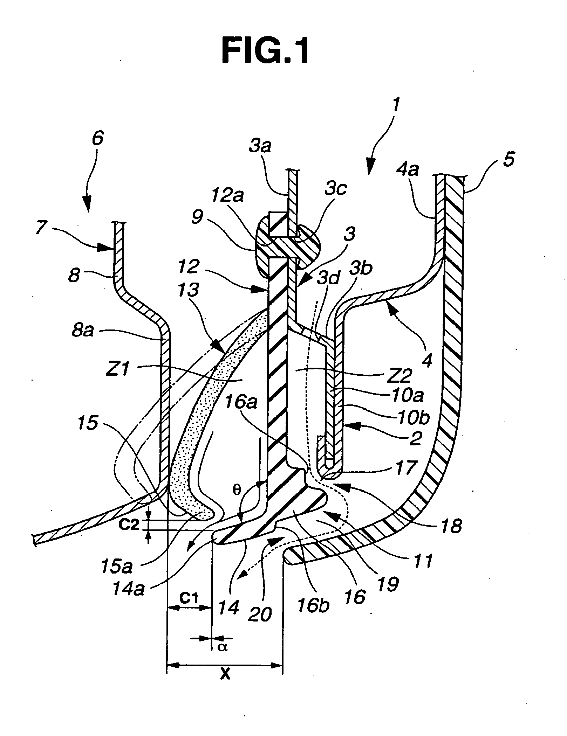

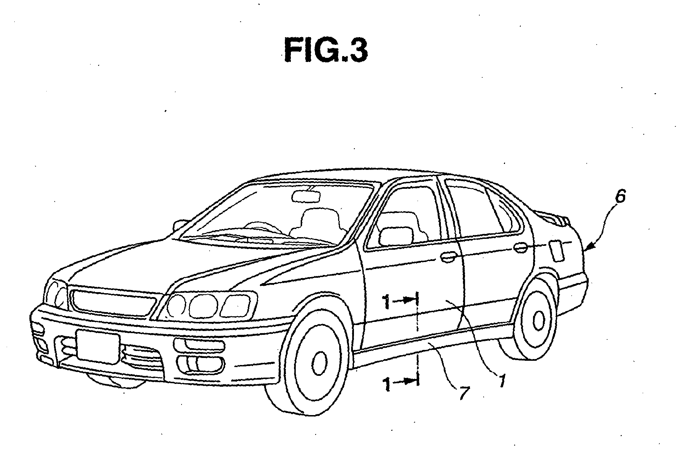

In the followings, embodiments of the present invention will be described with reference to the accompanying drawings. Referring to FIGS. 1 and 3, there is shown a parting seal for a vehicle door, according to a first embodiment of the present invention. The parting seal of the first embodiment can be applied to a lower end portion of front door 1 of a vehicle as shown in FIG. 3. In FIG. 3, reference numeral 6 denotes a body of the vehicle, and reference numeral 7 denotes a side sill of the vehicle.

FIG. 1 shows a cross-section of the parting seal, taken along line 1-1 of FIG. 3. As illustrated in FIG. 1, front door 1 includes door body 2 that is constituted of inner panel 3 and outer panel 4, and door molding 5 that is disposed at a lower end portion of an outside of outer panel 4 in a fore-and-aft direction of the vehicle, namely, in a longitudinal direction of the vehicle. Inner panel 3 is located on an inside of the vehicle, and outer panel 4 is located on an outside of the vehicle. Inner panel 3 and outer panel 4 are joined at outer peripheries thereof with each other by hemming. A door weatherstrip, not shown, for sealing a vehicle compartment against infiltration of water, dust or noise thereinto is disposed near an outer periphery of an inside of inner panel 3 and extends over an entire periphery of door body 2 so as to be opposed to a periphery of an opening in the vehicle body. Parting seal 11 is disposed substantially at a lower end periphery of the inside of inner panel 3 and located in a position lower than the door weatherstrip in a vertical direction of the vehicle, namely, in a up-and-down direction of the vehicle. Parting seal 11 is so constructed as to seal a clearance between a lower end portion of door body 2 and a lower end portion of vehicle body 6 as explained later.

Vehicle body 6 has body openings on both left and right sides thereof and side sill 7 shown in FIG. 3, which is located in a lower position of each of the body openings in the vertical direction of the vehicle. Side sill 7 forms a lower part of a peripheral edge of the body opening. Side sill 7 is constituted of a plurality of plates joined with each other. As illustrated in FIG. 1, side sill 7 includes sill outer panel 8 as an outer-most member. Sill outer panel 8 has a stepped projection on a lower end portion thereof which projects toward the outside of the vehicle. The stepped projection has planar vertical wall 8a on a top thereof which extends parallel to the vertical direction of the vehicle.

Inner panel 3 has connecting portion 10a at a lower end periphery thereof which is connected with connecting portion 10b of outer panel 4 by hemming. Inner panel 3 includes vertical wall 3a which is located immediately above connecting portion 10 and projects toward an inside of the vehicle in a width direction of the vehicle perpendicular to the longitudinal direction of the vehicle. Vertical wall 3a is located inside of connecting portion 10 in the width direction of the vehicle and extends substantially parallel to vertical wall 8a of the stepped projection of sill outer panel 8. Inner panel 3 further includes shelf-shaped wall 3b which is disposed between vertical wall 3a and connecting portion 10 and continuously connected with vertical wall 3a and connecting portion 10a. Shelf-shaped wall 3b may be arranged to be substantially perpendicular to vertical wall 3a and connecting portion 10a. Shelf-shaped wall 3b is formed with drain hole 3d which extends through shelf-shaped wall 3b and serves for discharging water which is infiltrated into door body 2.

Outer panel 4 has connecting portion 10b at a lower end periphery thereof which is connected with connecting portion 10a of inner panel 3, and vertical wall 4a which is disposed immediately above connecting portion 10b. Vertical wall 4a projects toward the outside of the vehicle in the width direction of the vehicle. Vertical wall 4a includes a vertical portion which is located outside of connecting portion 10b in the width direction of the vehicle. The vertical portion of vertical wall 4a extends substantially parallel to vertical wall 3a of inner panel 3. Vertical wall 4a further includes a step portion which is disposed between the vertical portion and connecting portion 10b. The step portion is continuously connected with the vertical portion and connecting portion 10b and extends outwardly in the width direction of the vehicle. Door molding 5 is attached to the vertical portion of vertical wall 4a. Door molding 5 is formed into a generally L-shape and may be made of a synthetic resin material. Door molding 5 is arranged to cover an outer surface of the lower end portion of front door 1. Door molding 5 serves for preventing the vehicle compartment from undergoing infiltration of water and dust.

Inner panel 3 has a plurality of engaging holes 3c which extends through vertical wall 3a in the width direction of the vehicle. Engaging holes 3c are arranged in a spaced relation to each other at predetermined intervals in the fore-and-aft direction of the vehicle. Resin clips 9 are engaged with engaging holes 3c, through which parting seal 11 is mounted to vertical wall 3a of inner panel 3. FIG. 1 shows one of resin clips 9.

Parting seal 11 includes mount base 12 which is mounted to vertical wall 3a of inner panel 3, and seal portion 13 which is integrally connected with an upper end portion of mount base 12. Mount base 12 downwardly extends in the vertical direction of the vehicle. Seal portion 13 downwardly extends from a side of an upper end portion of mount base 12 in the vertical direction of the vehicle toward the inside of the vehicle. When front door 1 is in the closed position, parting seal 11 seals a clearance between the lower end periphery of front door 1 and the lower end portion of sill outer panel 8.

Specifically, the upper end portion of mount base 12 is mounted to an inside surface of vertical wall 3a of inner panel 3 in the width direction of the vehicle. Mount base 12 downwardly extends parallel to vertical wall 3a of inner panel 3 substantially in the vertical direction of the vehicle. Mount base 12 extends longer than seal portion 13 in the vertical direction of the vehicle and has a lower end which is located between the lower end portion of door body 2 and a lower end portion, that is, a tip end portion, of door molding 5. Mount base 12 is made of a hard material such as a solid rubber and formed into a generally plate shape.

Mount base 12 is formed with a plurality of mount holes 12a which extends through the upper end portion of mount base 12 in the width direction of the vehicle. Mount holes 12a are spaced from each other at predetermined intervals in the fore-and-aft direction of the vehicle. Resin clips 9 are engaged with mount holes 12a in mount base 12 and engaging holes 3c in vertical wall 3a of inner panel 3. Parting seal 11 is fixed to the inside surface of vertical wall 3a of inner panel 3 by resin clips 9.

Projection 14 projects from a lower end portion of mount base 12 and bends toward the inside of the vehicle in the width direction of the vehicle. Projection 14 is integrally formed with mount base 12 and made of the same material, i.e., solid rubber, as that of mount base 12. Projection 14 cooperates with mount base 12 to form into a generally L-shape as viewed in cross-section as shown in FIG. 1. Projection 14 is inclined downwardly in the vertical direction of the vehicle with respect to mount base 12 so as to form an obtuse interior angle θ between projection 14 and mount base 12. Projection 14 includes tip end 14a which is located on an outside of side sill 7 of vehicle body 6 with predetermined clearance C1 in the width direction of the vehicle when front door 1 is in the closed position. That is, tip end 14a is spaced from an outside surface of sill outer panel 8 with predetermined clearance C1 in the width direction of the vehicle when front door 1 is in the closed position.

Seal portion 13 includes an upper end portion which is integrally connected with the upper end portion of mount base 12. Seal portion 13 is made of a soft material such as a sponge rubber. Extension 15 extends from a lower end portion of seal portion 13 and bends toward the outside of the vehicle in the width direction of the vehicle so as to be opposed to projection 14. Extension 15 is integrally formed with seal portion 13. Seal portion 13 with extension 15 is formed into a generally hook shape as viewed in cross-section as shown in FIG. 1. When seal portion 13 with extension 15 is in a natural state free from application of external force, i.e., a non-deformed state, extension 15 is downwardly inclined such that tip end 15a thereof is located on a lower side in the vertical direction of the vehicle as indicated by two-dot chain line in FIG. 1.

When front door 1 is moved to the closed position, seal portion 13 is urged by sill outer panel 8 and flexibly deformed toward the outside of the vehicle and brought into a deformed state as indicated by solid line in FIG. 1. In the deformed state, seal portion 13 with extension 15 cooperates with mount base 12 with projection 14 to seal the clearance between the lower end periphery of front door 1 and the lower end portion of sill outer panel 8. Specifically, an inside surface of the lower end portion of seal portion 13 which faces the inside of the vehicle is elastically contacted with an outside surface of vertical wall 8a of sill outer panel 8 which faces the outside of the vehicle. Seal portion 13 is pressed against the outside surface of vertical wall 8a such that tip end 15a of extension 15 is always placed upwardly offset from tip end 14a of projection 14 in the vertical direction of the vehicle.

Namely, parting seal 11 is so constructed as to be in an operating position as indicated by solid line in FIG. 1 when front door 1 is in the closed position. In this operating position, seal portion 13 is in the deformed state in which seal portion 13 is pressed against vertical wall 8a of sill outer panel 8 such that extension 15 is located on the upper side of projection 14 in the vertical direction of the vehicle. At this time, space Z1 is formed between seal portion 13 and mount base 12, which is substantially enclosed with mount base 12, projection 14, seal portion 13 and extension 15. Further, in this operating position, extension 15 cooperates with projection 14 to define a lower end opening between tip end 15a of extension 15 and tip end 14a of projection 14. The lower end opening is open to an outside of parting seal 11 and the outside of the vehicle, through which space Z1 is communicated with the outside of the vehicle. The lower end opening, however, is closed by projection 14 and extension 15 in the width direction of the vehicle as explained later.

That is, when parting seal 11 is placed in the operating position in the closed position of front door 1, tip end 15a of extension 15 is always placed upwardly offset from tip end 14a of projection 14 with predetermined clearance C2 in the vertical direction of the vehicle and tip end 15a of extension 15 and tip end 14a of projection 14 are located in predetermined position α in substantially alignment with each other in the width direction of the vehicle.

Parting seal 11 further includes channel forming portion 16 which defines a drain passage for discharging water from an inside of front door 1 to the outside of the vehicle. Channel forming portion 16 is integrally formed with mount base 12 and projects from the lower end portion of mount base 12 toward the outside of the vehicle in the width direction of the vehicle. Channel forming portion 16 has first grooved portion 16a on an upper portion thereof in the vertical direction of the vehicle. First grooved portion 16a is inwardly recessed from an outside surface of channel forming portion 16 in the width direction of the vehicle and formed into a stepped shape having a reduced thickness in the width direction of the vehicle. First grooved portion 16a cooperates with a lower end periphery of door body 2 to form first drain passage 17 therebetween. First drain passage 17 has a width in the width direction of the vehicle which is smaller than space Z2 between an outside surface of mount base 12 above first grooved portion 16a and an inside surface of connecting portion 10a of inner panel 3. Intermediate drain port 18 is formed between the upper portion of channel forming portion 16 and the lower end periphery of door body 2. Intermediate drain port 18 has a reduced opening area which is defined by first grooved portion 16a.

Channel forming portion 16 further has second grooved portion 16b on a lower end portion thereof. Second grooved portion 16b is upwardly recessed in the vertical direction of the vehicle so as to form a step between the lower end portion of channel forming portion 16 and projection 14. Channel forming portion 16 cooperates with door molding 5 to form second drain passage 19 between a bottom surface of second grooved portion 16b and an upper surface of a lower end portion (tip end portion) of door molding 5. Second grooved portion 16b cooperates with the lower end portion of door molding 5 to define drain port 20 of second drain passage 19 between a tip end of the lower end portion of door molding 5 and a peripheral edge of second grooved portion 16b which is located adjacent to an upper end portion of projection 14. Drain port 20 has a reduced opening area which is smaller than a sectional area of second drain passage 19.

An operation of parting seal 11 of this embodiment upon front door 1 being closed will now be explained by referring to FIG. 1. As illustrated in FIG. 1, when front door 1 is placed in the closed position, seal portion 13 is flexibly deformed toward the outside of the vehicle and brought into the deformed state. In the deformed state, seal portion is pressed against vertical wall 8a of sill outer panel 8 and placed in predetermined position α in which tip end 15a of extension 15 and tip end 14a of projection 14 are opposed in substantially alignment with each other in the width direction of the vehicle.

In this condition, during the vehicle running, the stone jumped outside of door body 2 is impinged on the outside surface of door molding 5 and flown off. On the other hand, the stone jumped into region X between door molding 5 and sill outer panel 8 on the inside of door body 2 is substantially impinged on the outside surface, namely, the lower surface, of projection 14 and flown off. The stone jumped into clearance C1 within region X is impinged on the lower surface of extension 15 of seal portion 13 and flown off.

That is, in the deformed state of seal portion 13, projection 14 and extension 15 are so arranged as to substantially completely close the lower end opening defined between tip end 14a of projection 14 and tip end 15a of extension 15. Projection 14 and extension 15 thus cooperate to each other to serve as a protective barrier against the stone jumped into region X. With this arrangement of projection 14 and extension 15, parting seal 11 can surely prevent the stone jumped into region X from entering from the lower end opening into space Z1 between mount base 12 and seal portion 13 and being caught in space Z1.

Further, when front door 1 is in the closed position, extension 15 is arranged upwardly offset from projection 14 such that predetermined clearance C2 is formed between tip end 14a of projection 14 and tip end 15a of extension 15. With this arrangement of extension 15, elastic force, i.e., reaction force, which is generated in parting seal 11 upon closing front door 1 can be reduced.

Further, in a case where water flowing down on a front end side or a rear end side of front door 1 enters from front-end and rear-end openings of parting seal 11 in the fore-and-aft direction of the vehicle into space Z1 between mount base 12 and seal portion 13, the water within space Z1 flows downward along the planar inside surface of mount base 12 or the curved surface of seal portion 13 between which space Z1 is defined, onto an upper surface of projection 14 as indicated by solid-line arrow in FIG. 1. Projection 14 bends so as to form obtuse interior angle θ relative to mount base 12 and is inclined such that tip end 14a is directed downwardly in the vertical direction of the vehicle. Therefore, the water is guided along the upper surface of projection 14 toward predetermined clearance C2 between tip end 14a of projection 14 and tip end 15a of extension 15. The water enters predetermined clearance C2 and then is smoothly discharged from predetermined clearance C2 to the outside of the vehicle.

With this arrangement of projection 14, parting seal 11 can prevent the water entering into space Z1 from remaining or staying within space Z1. Accordingly, the water remaining or staying within space Z1 can be prevented from being frozen, and therefore, it is possible to suppress deterioration in opening/closing ability of front door 1 due to the frozen water.

Further, in a case where water enters into space Z2 between mount base 12 and connecting portion 10a of inner panel 3 through drain hole 3d of door body 2 or front-end and rear-end openings of parting seal 11 in the fore-and-aft direction of the vehicle, the water within space Z2 flows through first drain passage 17 and intermediate drain port 18 to the outside of space Z2 and then flows down onto the upper surface of the lower end portion of door molding 5 as indicated by dotted-line arrow in FIG. 1. Door molding 5 is downwardly inclined in the vertical direction. Therefore, the water is guided along the upper surface of the lower end portion of door molding 5 into second drain passage 19 and discharged from drain port 20 to the outside of the vehicle.

Accordingly, parting seal 11 can surely establish a drain path extending from drain hole 3d to the outside of the vehicle and can prevent the water flowing into space Z2 from remaining or staying within space Z2. Parting seal 11, therefore, can enhance drainage ability of door body 2.

Further, projection 14 and extension 15 are so arranged as to cooperate with each other to close the lower end opening defined between respective tip ends 14a and 15a in the width direction of the vehicle. With this construction, parting seal 11 can ensure that a stone which is jumped upon the vehicle running is prevented from being caught in space Z1 through the lower end opening. Accordingly, when front door 1 is closed again, sill outer panel 8 can be prevented from being damaged due to the stone caught in space Z1.

Further, in the closed position of front door 1, extension 15 is placed upwardly offset from projection 14 in the vertical direction of the vehicle with predetermined clearance C2 between tip end 15a of extension 15 and tip end 14a of projection 14. With this vertically offset arrangement, extension 15 and projection 14 can be always kept out of contact with each other. Therefore, as compared with the hollow parting seal of the conventional art, it is possible to reduce elastic force, i.e., reaction force, which is generated in parting seal 11 when front door 1 is closed. Accordingly, occurrence of problems such as deterioration of closing ability of front door 1 can be suppressed.

Further, projection 14 is spaced from sill outer panel 8 with predetermined clearance C1 in the width direction of the vehicle in the closed position of front door 1. Therefore, projection 14 can be prevented from suffering from elastic force, i.e., reaction force which is generated in parting seal 11 when front door 1 is closed. This prevents increase in elastic force, i.e., reaction force of parting seal 11. Accordingly, occurrence of problems such as deterioration of closing ability of front door 1 can be suppressed. Further, since projection 14 is made of the hard material, projection 14 can be prevented from being deteriorated or deformed with time or being damaged due to repetitive impingement of the jumped stones against projection 14. As a result, parting seal 11 can be enhanced in durability. Further, in such a case, a clearance in the width direction of the vehicle cannot be caused at the lower end portion of projection 14 so that parting seal 11 can be surely prevented from entering and catching of the jumped stone in space Z1.

Further, mount base 12 is made of a hard material. Rigidity of mount base 12 can be increased, and therefore, mount base 12 can be restrained from being deformed with time and being curved toward the outside of the vehicle. Accordingly, channel forming portion 16 of mount base 12 can be prevented from coming into contact with the lower end periphery of door body 2 and closing intermediate drain port 18. This serves for enhancing drainage of water within space Z2.

Further, channel forming portion 16 is so configured as to narrow drain port 20 and intermediate drain port 18 while keeping the drainage ability. With this construction of channel forming portion 16, foreign objects such as a stone can be prevented from entering from drain port 20 and intermediate drain port 18 into a space between door molding 5 and outer panel 4 and space Z2 between mount base 12 and inner panel 3.

Furthermore, even if mount base 12 is deformed and curved toward the outside of the vehicle in the width direction of the vehicle due to deterioration with time, first grooved portion 16a of channel forming portion 16 can be contacted with the lower end periphery of outer panel 4 to thereby restrict further outward displacement of mount base 12 in the width direction of the vehicle. This suppresses generation of a large clearance between projection 14 and extension 15 in the width direction of the vehicle which would be caused due to the outward displacement of mount base 12.

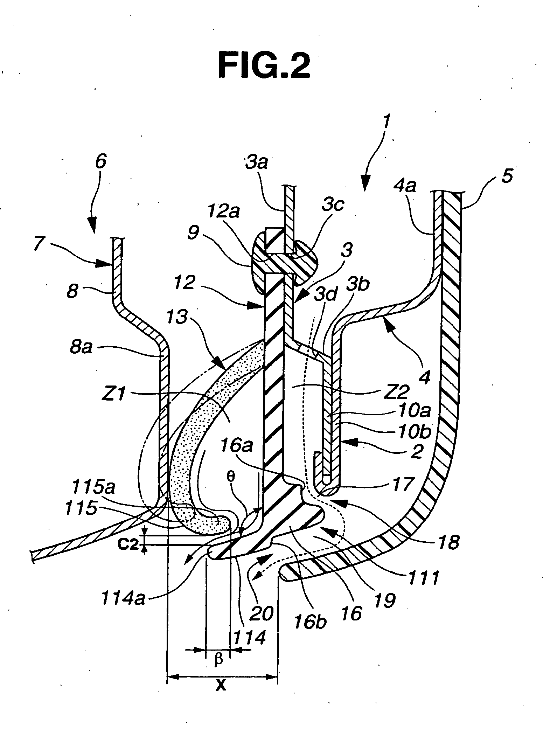

Referring to FIG. 2, there is shown a second embodiment of the parting seal of the present invention. The second embodiment is similar to the first embodiment except for construction and arrangement of the extension and the projection. Like reference numerals denote like parts, and therefore, detailed explanations therefor can be omitted.

As illustrated in FIG. 2, parting seal 111 of the second embodiment includes projection 114 and extension 115. Tip end 114a of projection 114 and tip end 115a of extension 115 are so arranged as to overlap with each other in the width direction of the vehicle when seal portion 13 is in the deformed state and pressed against vertical wall 8a of sill outer panel 8. Specifically, when front door 1 is in the closed position and seal portion 13 is in the deformed state, tip end 115a of extension 115 is placed on the outside of tip end 114a of projection 114 in the width direction of the vehicle with predetermined clearance C2 in the vertical direction of the vehicle. That is, in the deformed state of seal portion 13, tip end 115a of extension 115 overlaps with tip end 114a of projection 114 within predetermined region β in the width direction of the vehicle and is spaced from tip end 114a with predetermined clearance C2 in the vertical direction of the vehicle.

With this arrangement of extension 115 and projection 114, when front door 1 is in the closed position, seal portion 13 is flexibly deformed into the deformed state in which seal portion 13 is pressed against vertical wall 8a of sill outer panel 8 and tip end 115a of extension 115 overlaps with tip end 114a of projection 114 in the width direction of the vehicle and placed above tip end 114a with predetermined clearance C2 in the vertical direction of the vehicle.

The second embodiment can attain the following effects in addition to the same effects as those of the first embodiment. Particularly, when seal portion 13 is in the deformed state in the closed position of front door 1, projection 114 and extension 115 are placed in the overlapping state in the width direction of the vehicle and cooperate with each to form a double-walled closing structure in which respective tip ends 114a and 115a completely close the lower end opening therebetween in the width direction of the vehicle. Accordingly, the second embodiment can more effectively prevent a foreign object such as a stone from being jumped into space Z1 between mount base 12 and seal portion 13 and caught in space Z1 during the vehicle running.

Further, with the overlapping arrangement of tip end 114a of projection 114 and tip end 115a of extension 115 within predetermined region β, the lower end opening between respective tip ends 114a and 115a can be surely closed in the width direction of the vehicle even when there occurs variation in position of door body 2 in the width direction of the vehicle due to variation in dimension of projection 114 and extension 115 or error in mounting position of front door 1.

Further, in the overlapping state, tip end 115a of extension 115 is located above tip end 114a of projection 114 in the vertical direction of the vehicle. Therefore, almost of the stones jumped into region X can impinge on the lower surface (the outside surface) of projection 114, and only the stone jumped into a space between tip end 14a of projection 114 and sill outer panel 8 can impinge on the lower surface of extension 115. As a result, frequency of impingement of the jumped stone on extension 115 can be reduced, whereby seal portion 13 made of a soft rubber can be prevented from being damaged in the vicinity of extension 115 and therefore can be prevented from being deteriorated in sealing ability thereof.

The present invention is not limited to the above-described first and second embodiments. Parting seal 11, 111 can be modified in shape and size depending on specification and size of the vehicle to which parting seal 11, 111 is applied.

The size and shape of mount base 12 and seal portion 13, particularly, the bending angles of projection 14, 114 and extension 15, 115 can be optionally modified. Concretely, if interior angle θ of projection 14, 114 is set at an obtuse angle and extension 15, 115 is downwardly inclined such that tip end 15a, 115a is located on a lower side in the vertical direction of the vehicle in the natural state of seal portion 13, the same effects as those of the first and second embodiments can be achieved.

Further, the shape of seal portion 13 is not limited to the first and second embodiments and can be variously modified so long as tip end 15a, 115a of extension 15, 115 is always located upwardly offset from tip end 14a, 114a of projection 14, 114 in the vertical direction of the vehicle when front door 1 is in the closed position. For instance, even in a case where seal portion 13 downwardly extends longer than mount base 12 such that the bend of seal portion 13 is located on the lower side of tip end 14a, 114a of projection 14, 114, the same effects as those of the first and second embodiments can be obtained so long as tip end 15a, 115a of extension 15, 115 is always located upwardly offset from tip end 14a, 114a of projection 14, 114 in the vertical direction of the vehicle in the closed position of front door 1.

Furthermore, the materials of mount base 12 and seal portion 13 are not limited to the first and second embodiments. Mount base 12 can be made of a thermoplastic elastomer instead of the solid rubber. Seal portion 13 can be made of a foamed thermoplastic elastomer instead of the sponge rubber.

This application is based on a prior Japanese Patent Application No. 2006-127198 filed on May 1, 2006. The entire contents of the Japanese Patent Application No. 2006-127198 is hereby incorporated by reference.

Although the invention has been described above by reference to certain embodiments of the invention, the invention is not limited to the embodiments described above. Modifications and variations of the embodiments described above will occur to those skilled in the art in light of the above teachings. The scope of the invention is defined with reference to the following claims.

## Claims

1. A parting seal for a door (1) of a vehicle (6), the parting seal comprising:
a mount base (12) adapted to be mounted to a lower end portion of the door (1) of the vehicle (6) in a vertical direction of the vehicle (6), the mount base (12) including a lower end portion and an upper end portion that is mountable to an inside surface of the lower end portion of the door (1) of the vehicle (6); and
a seal portion (13) being flexibly deformed into a deformed state when the door (1) of the vehicle (6) is in a closed position;
**characterized in that**
the seal portion (13) extends downwardly from a side of the upper end portion of the mount base (12) in the vertical direction of the vehicle (6);
when the door (1) of the vehicle (6) is in a closed position, the seal portion (13) is pressable against a body of the vehicle (6) and cooperates with the mount base (12) to seal a clearance between the body of the vehicle (6) and the door (1) of the vehicle (6) in the deformed state;
a projection (14; 114) is provided which extends from the lower end portion of the mount base (12) and bends toward an inside of the vehicle (6), the projection being integrally formed with the mount base (12);
an extension (15; 115) is provided which extends from a lower end portion of the seal portion (13) and bends to be opposed to the projection (14; 114), the extension being integrally formed with the seal portion (13),
the projection (14; 114) includes a tip end (14a; 114a) which is located spaced from an outside surface of the body of the vehicle (6) with a clearance (C1) when the seal portion (13) is in the deformed state, and
the extension (15; 115) includes a tip end (15a; 115a) which is always placed upwardly offset (C2) from the tip end (14a; 114a) of the projection (14; 114) in the vertical direction of the vehicle (6) when the seal portion (13) is in the deformed state.

2. The parting seal as claimed in claim 1, **characterized in that** the tip end (15a; 115a) of the extension (15; 115) and the tip end (14a; 114a) of the projection (14; 114) are spaced from each other with a clearance (C2) therebetween in the vertical direction of the vehicle (6) when the seal portion (13) is in the deformed state.

3. The parting seal as claimed in claim 1 or 2, **characterized in that** the tip end (15a) of the extension (15) and the tip end (14a) of the projection (14) are substantially aligned with each other in a width direction of the vehicle (6) when the seal portion (13) is in the deformed state.

4. The parting seal as claimed in one of claims 1 to 3, **characterized in that** the tip end (115a) of the extension (115) and the tip end (114a) of the projection (114) overlap with each other in a width direction of the vehicle (6) when the seal portion (13) is in the deformed state.

5. The parting seal as claimed in one of claims 1 to 4, **characterized in that** the projection (14; 114) and the mount base (12) form an obtuse interior angle therebetween.

6. The parting seal as claimed in one of claims 1 to 5, **characterized in that** the projection (14; 114) is made of a hard material.

7. The parting seal as claimed in one of claims 1 to 6, **characterized in that** the mount base (12) is made of a hard material.

8. The parting seal as claimed in one of claims 1 to 7, **characterized in that** the lower end portion of the mount base (12) is arranged to be spaced from the door (1) of the vehicle (6).

9. The parting seal as claimed in claim 1, **characterized in that** it further comprises a channel forming portion (16) which defines a drain passage for discharging water from an inside of the door (1) of the vehicle (6), the channel forming portion being integrally formed with the mount base (12) and projecting from the lower end portion of the mount base (12) toward an outside of the vehicle (6) in a width direction of the vehicle (6).

10. The parting seal as claimed in claim 9, **characterized in that** the channel forming portion (16) comprises a plurality of grooved portions (16a, 16b).

## Patentansprüche

1. Trenndichtung für eine Tür (1) eines Fahrzeuges (6), wobei die Trenndichtung aufweist:
eine Montagebasis (12), vorgesehen, um an einem unteren Endabschnitt der Tür (1) des Fahrzeuges (6) in einer vertikalen Richtung des Fahrzeuges (6) montiert zu werden, wobei die Montagebasis (12) einen unteren Endabschnitt und einen oberen Endabschnitt enthält, die an einer inneren Oberfläche des unteren Endabschnittes der Tür (1) des Fahrzeuges (6) montiert werden können; und einen Dichtungsabschnitt (13), der flexibel deformiert ist in einen deformierten Zustand, wenn die Tür (1) des Fahrzeuges (6) in einer geschlossen Position ist;
**dadurch gekennzeichnet, dass**
sich der Dichtungsabschnitt (13) nach unten von einer Seite des oberen Endabschnittes der Montagebasis (12) in der vertikalen Richtung des Fahrzeuges (6) erstreckt;
wobei, wenn die Tür (1) des Fahrzeuges (6) in einer geschlossenen Position ist, der Dichtungsabschnitt (13) gegen eine Karosserie des Fahrzeuges (6) pressbar ist und mit der Montagebasis (12) zusammenwirkt, um einen Spalt zwischen der Karosserie des Fahrzeuges (6) und der Tür (1) des Fahrzeuges (6) in dem deformierten Zustand abzudichten;
ein Vorsprung (14; 114) vorgesehen ist, der sich von dem unteren Endabschnitt der Montagebasis (12) erstreckt und sich in Richtung nach Innen des Fahrzeuges (6)biegt, wobei der Vorsprung einstückig mit der Montagebasis (12) gebildet ist; eine Verlängerung (15; 115) vorgesehen ist, die sich von einem unteren Endabschnitt des Dichtungsabschnittes (13) erstreckt und sich biegt, um zu dem Vorsprung (14; 114) gegenüberliegend zu sein, wobei die Verlängerung (15; 115) einstückig mit dem Dichtungsabschnitt (13) gebildet ist,
wobei der Vorsprung (14; 114) ein Spitzenende (14a; 114a) enthält, das von einer äußeren Oberfläche des Fahrzeuges (6) mit einem Spalt (C1) beabstandet ist, wenn der Dichtungsabschnitt (13) in dem deformierten Zustand ist, und
die Verlängerung (15; 115) ein Spitzenende (15a; 115a) enthält, das immer nach oben, versetzt (C2) von dem Spitzenende (14a; 114a) des Vorsprungs (14; 114) in der vertikalen Richtung des Fahrzeuges (6), platziert ist, wenn der Dichtungsabschnitt (13) in dem deformierten Zustand ist.

2. Trenndichtung nach Anspruch 1, **dadurch gekennzeichnet, dass** das Spitzenende (15a; 115a) der Verlängerung (15; 115) und das Spitzenende (14a; 114a) des Vorsprungs (14; 114) voneinander mit einem Spalt (C2) dazwischen in der vertikalen Richtung des Fahrzeuges (6) beabstandet sind, wenn der Dichtungsabschnitt (13) in dem deformierten Zustand ist.

3. Trenndichtung nach Anspruch 1 oder 2, **dadurch gekennzeichnet, dass** das Spitzenende (15a) der Verlängerung (15) und das Spitzenende (14a) des Vorsprungs (14) im Wesentlichen miteinander in einer Richtung der Breite des Fahrzeuges (6) ausgerichtet sind, wenn der Dichtungsabschnitt (13) in dem deformierten Zustand ist.

4. Trenndichtung nach einem der Ansprüche 1 bis 3, **dadurch gekennzeichnet, dass** das Spitzenende (115a) der Verlängerung (115) und das Spitzenende (114a) des Vorsprungs (114) miteinander in einer Richtung der Breite des Fahrzeuges (6) überlappen, wenn der Dichtungsabschnitt (13) in dem deformierten Zustand ist.

5. Trenndichtung nach einem der Ansprüche 1 bis 4, **dadurch gekennzeichnet, dass** der Vorsprung (14; 114) und die Montagebasis (12) einen stumpfen Innenwinkel zwischen sich bilden.

6. Trenndichtung nach einem der Ansprüche 1 bis 5, **dadurch gekennzeichnet, dass** der Vorsprung (14; 114) aus einem harten Material hergestellt ist.

7. Trenndichtung nach einem der Ansprüche 1 bis 6, **dadurch gekennzeichnet, dass** die Montagebasis (12) aus einem harten Material hergestellt ist.

8. Trenndichtung nach einem der Ansprüche 1 bis 7, **dadurch gekennzeichnet, dass** der untere Endabschnitt der Montagebasis (12) angeordnet ist, um von der Tür (1) des Fahrzeuges (6) beabstandet zu sein.

9. Trenndichtung nach Anspruch 1, **dadurch gekennzeichnet, dass** sie außerdem einen kanalbildenden Abschnitt (16) aufweist, der einen Ablaufkanal zum Abgeben von Wasser aus dem Inneren der Tür (1) des Fahrzeuges (6) bildet, wobei der kanalbildende Abschnitt mit der Montagebasis (12) einstückig gebildet ist und von dem unteren Endabschnitt der Montagebasis (12) in Richtung nach außen des Fahrzeuges (6) in einer Richtung der Breite des Fahrzeuges (6) vorspringt.

10. Trenndichtung nach Anspruch 9, **dadurch gekennzeichnet, dass** der kanalbildende Abschnitt (15) eine Mehrzahl von genuteten Abschnitten (16a, 16b) aufweist.

## Revendications

1. Joint de séparation pour une portière (1) d'un véhicule (6), le joint de séparation comprenant :
une base de support (12) adaptée pour être montée sur une partie d'extrémité inférieure de la portière (1) du véhicule (6) dans une direction verticale du véhicule (6), la base de support (12) comprenant une partie d'extrémité inférieure et une partie d'extrémité supérieure qui peut être montée sur une surface intérieure de la partie d'extrémité inférieure de la portière (1) du véhicule (6) ; et une partie de joint (13) qui est déformée de manière flexible dans un état déformé lorsque la portière (1) du véhicule (6) est dans une position fermée ;
**caractérisé en ce que** :
la partie de joint (13) s'étend vers le bas à partir d'un côté de la partie d'extrémité supérieure de la base de support (12) dans la direction verticale du véhicule (6) ;
lorsque la portière (1) du véhicule (6) est dans une position fermée, la partie de joint (13) peut être pressée contre une caisse du véhicule (6) et coopère avec la base de support (12) pour réaliser l'étanchéité d'un jeu situé entre la caisse du véhicule (6) et la portière (1) du véhicule (6) dans l'état déformé ;
on prévoit une saillie (14 ; 114) qui s'étend à partir de la partie d'extrémité inférieure de la base de support (12) et fléchit vers un intérieur du véhicule (6), la saillie étant formée de manière solidaire avec la base de support (12) ;
on prévoit une extension (15 ; 115) qui s'étend à partir d'une partie d'extrémité inférieure de la partie de joint (13) et fléchit pour être opposée à la saillie (14 ; 114), l'extension étant formée de manière solidaire avec la partie de joint (13),
la saillie (14 ; 114) comprend une extrémité de pointe (14a ; 114a) qui est positionnée à distance d'une surface externe de la caisse du véhicule (6) avec un jeu (C1) lorsque la partie de joint (13) est dans l'état déformé, et
l'extension (15 ; 115) comprend une extrémité de pointe (15a ; 115a) qui est toujours placée en décalage vers le haut (C2) par rapport à l'extrémité de pointe (14a ; 114a) de la saillie (14 ; 114) dans la direction verticale du véhicule (6) lorsque la partie de joint (13) est dans l'état déformé.

2. Joint de séparation selon la revendication 1, **caractérisé en ce que** l'extrémité de pointe (15a ; 115a) de l'extension (15 ; 115) et l'extrémité de pointe (14a ; 114a) de la saillie (14 ; 114) sont espacées l'une de l'autre avec un jeu (C2) entre elles dans la direction verticale du véhicule (6) lorsque la partie de joint (13) est dans l'état déformé.

3. Joint de séparation selon la revendication 1 ou 2, **caractérisé en ce que** l'extrémité de pointe (15a) de l'extension (15) et l'extrémité de pointe (14a) de la saillie (14) sont sensiblement alignées l'une par rapport à l'autre dans le sens de la largeur du véhicule (6) lorsque la partie de joint (13) est dans l'état déformé.

4. Joint de séparation selon l'une quelconque des revendications 1 à 3, **caractérisé en ce que** l'extrémité de pointe (115a) de l'extension (115) et l'extrémité de pointe (114a) de la saillie (114) se chevauchent l'une l'autre dans le sens de la largeur du véhicule (6) lorsque la partie de joint (13) est dans l'état déformé.

5. Joint de séparation selon l'une quelconque des revendications 1 à 4, **caractérisé en ce que** la saillie (14 ; 114) et la base de support (12) forment un angle intérieur obtus entre elles.

6. Joint de séparation selon l'une quelconque des revendications 1 à 5, **caractérisé en ce que** la saillie (14 ; 114) est réalisée en un matériau dur.

7. Joint de séparation selon l'une quelconque des revendications 1 à 6, **caractérisé en ce que** la base de support (12) est réalisée en un matériau dur.

8. Joint de séparation selon l'une quelconque des revendications 1 à 7, **caractérisé en ce que** la partie d'extrémité inférieure de la base de support (12) est agencée pour être espacée de la portière (1) du véhicule (6).

9. Joint de séparation selon la revendication 1, **caractérisé en ce qu'**il comprend en outre une partie de formation de canal (16) qui définit un passage de drain pour décharger l'eau provenant d'un intérieur de la portière (1) du véhicule (6), la partie de formation de canal étant formée de manière solidaire à la base de support (12) et faisant saillie de la partie d'extrémité inférieure de la base de support (12) vers un extérieur du véhicule (6) dans le sens de la largeur du véhicule (6).

10. Joint de séparation selon la revendication 9, **caractérisé en ce que** la partie de formation de canal (16) comprend une pluralité de parties rainurées (16a, 16b).
